## Europäisches Patentamt
## European Patent Office
## Office européen des brevets

(19)

(11) Veröffentlichungsnummer: **0 108 997**
**B1**

(12) # EUROPÄISCHE PATENTSCHRIFT

(45) Veröffentlichungstag der Patentschrift:
14.01.87

(51) Int. Cl.⁴: **F 04 B 21/02,** F 16 K 15/08

(21) Anmeldenummer: **83110896.4**

(22) Anmeldetag: **02.11.83**

(54) Plattenventil mit aussermittig ansetzenden Ventilplattenlenkern.

(30) Priorität: 06.11.82 DE 3241050
01.03.83 DE 3307118

(43) Veröffentlichungstag der Anmeldung:
23.05.84 Patentblatt 84/21

(45) Bekanntmachung des Hinweises auf die Patenterteilung:
14.01.87 Patentblatt 87/3

(84) Benannte Vertragsstaaten:
AT BE CH DE FR GB IT LI LU NL SE

(56) Entgegenhaltungen:
DE-A-1 500 015
DE-C-1 035 995
FR-A-2 025 245
FR-A-2 396 224
US-A-4 196 746

(73) Patentinhaber: **DIENES WERKE FÜR MASCHINENTEILE GMBH & CO KG, Kölner Strasse 7, D-5063 Overath 1 (DE)**

(72) Erfinder: **Lüdenbach, Karl, Ing. grad., Vordersteimel 51, D-5250 Engelskirchen (DE)**
Erfinder: **Huhn, Erhard, Dipl.- Ing., Aggerhof 1, D-5063 Overath (DE)**

(74) Vertreter: **Weinkauff, Wolfgang, Fuchshohl 71, D-6000 Frankfurt 50 (DE)**

## Beschreibung

Die Erfindung geht aus von einem Plattenventil, dessen runde Ventilplatte zwischen Radialstegen und diese verbindenden Ringen kreissegmentförmige Durchlaßöffnungen bildet, die mit entsprechenden Öffnungen in Sitz und Fänger sowie etwaigen Feder- oder Dämpfungsplatten korrespondieren, wobei die Ventilplatte reibungsfrei geführt ist durch ihr anwachsende in Umfangsrichtung verteilte bogenförmige Lenker.

Bekannte Ventile dieser Gattung haben einen Zentralbolzen, der die freien Lenkarmenden hält zwischen Beilegscheiben, deren Dicke den Hub der Ventilplatte bestimmt. Die Lenker verlaufen dann von der Wurzel an der Ventilplatte spiralig nach innen zum Zentralbolzen, der Sitz und Fänger und die Plattengarnitur durchsetzt. Dabei wurden im Inneren angeordnete kreissegmentförmige Durchlaßöffnungen von Sitz und Fänger durch die Ventilplattenlenker überkreuzt und somit teilweise abgedeckt und teilweise im Sitz durch die Trennschlitze der Platte nicht überdeckt, so daß auf diese ganz verzichtet werden muß, bei entsprechender Minderung der Förderleistung. Wegen der nur im Nabenbereich angreifenden Lenker und in der Praxis kaum vermeidbarer unterschiedlicher Strömungsgeschwindigkeiten des Mediums in verschiedenen Bereichen der Ventilplatte neigt diese zum Taumeln, und damit zur Minderung der Förderleistung, umso mehr, je größer der Durchmesser der Ventilplatte gewählt wird. Mit der bekannten Lenkergeometrie können daher nur kleine und mittlere reibungsfrei führende Plattenventile hergestellt werden.

Dabei haben die im Nabenbereich verlaufenden Lenker einen kleinen Krümmungsradius und eine geringe Länge. Sie sind deshalb ziemlich steif und werden unmittelbar neben der Nabeneinspannung stark auf Verwindung geansprucht und gehen dort vorzeitig zu Bruch, wenn nicht die Nabeneinspannung nach Art eines Kippgelenkes ausgebildet wird, was zusätzliche konstruktive Maßnahmen bedingt.

Aus DE-C-1035995 ist eine weiter entwickelte Ventilplatte bekannt. Für ihre Führung ist eine Lenkerplatte vorgesehen.

Aufgabe der Erfindung ist es, diese Nachteile zu vermeiden, also eine größere Förderleistung je Hubspiel bei gegebenem Ventilquerschnitt zu ermöglichen. Dazu wird die im Hauptanspruch gekennzeichnete Merkmalskombination vorgeschlagen.

Weil die Lenker im radial mittleren Bereich je eines Steges der Ventilplatte ansetzen, gleichen sich etwaige betriebliche Staudruckunterschiede infolge unterschiedlicher Strömungsgeschwindigkeiten des Mediums durch verschiedene Plattenbereiche weitgehend aus, so daß nun auch große reibungsfrei führende Plattenventile gebaut werden können und trotzdem die Taumelneigung der Ventilplatte weitgehend unterdrückt ist. Die auf einem größeren Radius verlaufenden Lenkarme sind entsprechend länger und federn weicher und werden weniger und fast ohne Torsion beansprucht, verglichen mit den bekannten gattungsgemäßen Ventilen.

Weil die Lenker über einem Ring der Sitzplatte spielen, kreuzen sie deren Durchlaßschlitze nicht, und der volle Öffnungsquerschnitt der Durchlsßöffnungen in Sitz und im wesentlichen in Fänger und Ventilplatte wird weder durch die Lenker beeinträchtigt noch durch die Wurzeln der Lenker und auch nicht durch Einspannung der freien Lenkarmenden, weil Wurzeln und Montagebolzen in den kongruenten Stegbereichen von Sitz, Fänger und Ventilplatte liegen. Der bisherige Zentralbolzen kann entfallen, so daß das neue Ventil auch in Achsmitte Durchlaßöffnungen haben kann.

Zur weiteren Vergrößerung der Förderleistung unter sonst gleichen konstruktiven und Betriebsbedingungen wird in Weiterbildung der Erfindung vorgeschlagen, daß die Lenker konzentrisch auf wenigstens zwei Ringbereiche verteilt sind und die Hubbeilagen der radial inneren Einspannungen ein geringeres Gesamtdickenmaß haben als die Hubbeilagen der radial äußeren Einspannungen. Dadurch verformen sich beim Anziehen der zugehörigen Montageschrauben Sitz und Fänger elastisch und konvex etwas gegeneinander. Im Betrieb wird der Sitz gegen Ende des Schließhubes durch die Wucht der auftreffenden Ventilplatte und den sich gleichzeitig aufbauenden Druck des abzusperrenden Fördermediums in entgegengesetzter Richtung durchgewölbt, also konkav zum Fänger. Durch entsprechende Bemessung der erfindungsgemäßen Vorspannung kann erreicht werden, daß die Pfeilhöhe der konvexen Vorwölbung des Sitzes ungefähr entgegengesetzt gleichgroß ist der Pfeilhöhe der konkaven Durchwölbung am Ende des betrieblichen Schließhubes. Der Sitz wird also aus seiner entspannten ebenen Mittellage durch die Belastung beim Schließen des Ventiles nur halb so weit verformt, als es dem gesamten Verformungsweg entspricht. Da eine bestimmte Verformung der ebenen Sitzfläche nicht überschritten werden darf, weil sonst das Ventil nicht mehr dicht schließen würde, ist hierdurch die Dicke des Sitzes von Plattenventilen vorgegeben. Mit der erfindungsgemäßen elastischen Vorspannung des Sitzes gegen den Fänger kann ohne Überschreitung dieses Wölbungsmaßes die Sitzstärke wesentlich verringert werden, und entsprechend verringert sich auch der Schadraum und vergrößert sich die mit dem erfindungsgemäßen Ventil erzielbare Förderleistung, und wird die Masse des Ventilsitzes kleiner. Letzteres hat eine bessere Dämpfung des Schließungsschlages der Ventilplatte gegen den Sitz zur Folge.

Diese Vorteile können bei einem erfindungsgemäßen Plattenventil auch dadurch erreicht werden, daß ein an sich bekannter Zentralbolzen vorgesehen ist mit Hubbeilagen, deren Gesamtdicke kleiner ist als diejenige der Hubbeilagen der Lenker. Dadurch kann man mit nur einem Lenkerkranz auskommen.

Zur Fertigung von Ventilplatten und Dämpferplatten kann je nach Abmessung der Trennschlitze zwischen den Lenkern und den sie umgebenden Rändern der Platte Stanzen, Nibbeln, Wasserstrahlschneiden, Erodieren oder vorzugsweise Laserschneiden insbesondere der Trennschlitze oder eine Kombination dieser Methode eingesetzt werden.

Während des Schneidens wird zweckmäßig koaxial zum Laserstrahl Sauerstoffgas auf den Brennfleck geblasen. Dadurch wird einmal das Plattenmaterial in der Umgebung der Schnittränder gekühlt und dort eine Vergröberung des Materialgefüges (Anlaßeffekt) verhindert, während andererseits das Sauerstoffgas in bekannter Weise eine exotherme zusätzliche Erwärmung der Schneidstelle bewirkt und das ausgeschmolzene Schneidgut aus dem so entstehenden Trennschlitz bläst, was zu einer Vergrößerung der Schnittgeschwindigkeit führt.

Um trotzdem hinreichend glatte Kanten der Trennschlitze an den Lenkern zu erhalten, wird in Weiterbildung der Erfindung der Laser pulsierend betrieben. Mit einem 500 Watt-$CO_2$-Laser und einer üblichen Stärke der Ventilplatte von 2,0 mm wurde eine Schnittgeschwindigkeit von 5 m/min. erreicht, bei einem Rauhigkeitswert an der Schnittkante von 0,02 mm.

Mit dem erfindungsgemäßen Verfahren ist also eine sehr wirtschaftliche präzise Massenfertigung der neuen Ventilplatte möglich, auch für kleine Ventiltypen.

Die Erfindung möge anhand des in den Figuren dargestellten Ausführungsbeispiels veranschaulicht werden. Es zeigen:

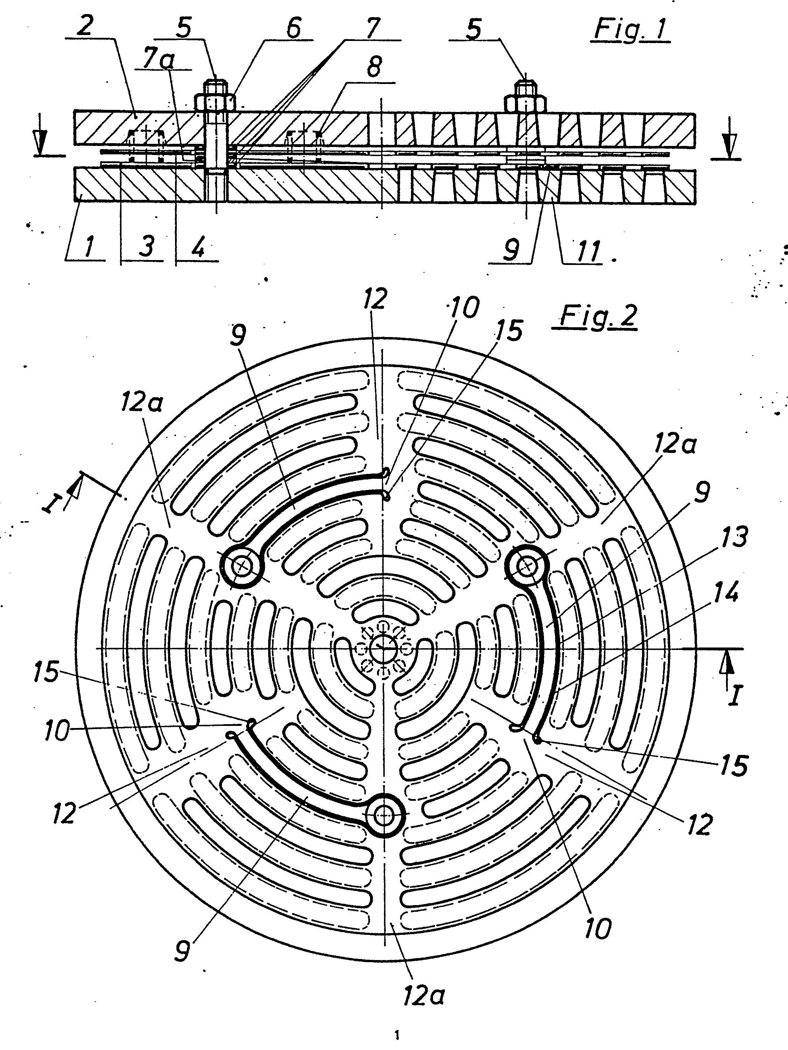

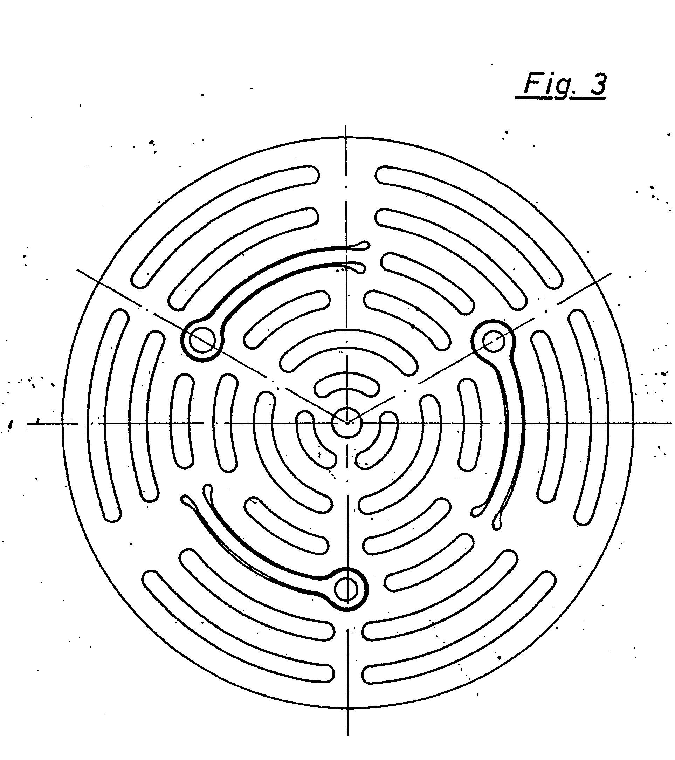

Fig. 1 einen Axialschnitt in der Ebene I/I aus Fig. 2 durch das ganze Ventil,

Fig. 2 eine Draufsicht zu Fig. 1, bei abgenommener Fänger- und Dämpferplatte,

Fig. 3 eine Draufsicht auf die Ventilplatte,

Fig. 4 einen Axialschnitt in der Ebene IV aus Fig. 5, zu einem Ausführungsbeispiel mit vorgespanntem Sitz und Fänger,

Fig. 5 eine Draufsicht zu Fig. 4,

Fig. 6 einen Schnitt in der Ebene VI aus Fig. 7, zu einem anderen Ausführungsbeispiel mit gegeneinander vorgespanntem Sitz und Fänger und

Fig. 7 eine Draufsicht zu Fig. 6.

Zwischen korrespondierenden Durchlaßschlitzen im Sitz 1 und Fänger 2 spielt in bekannter Weise die Ventilplatte 3 bzw. 3 a bzw. 3 b. Sie ist reibungsfrei geführt durch ihr anwachsende in Umfangsrichtung verteilte bogenförmige Lenker 9 bzw. 13 a bzw. 13 b, deren Wurzeln 10 mit Ausrundungen 15 mittig in je einem Steg 12 der Ventilplatte 3 angeschnitten sind. Die Lenker 9 bzw. 13 a bzw. 13 b verlaufen parallel über einen Ring 11 des Sitzes 1 und bilden an ihrem freien Ende je einen Einspannring 7 a, welcher, zusammen mit anderen Hubbeilagen 7, je eine Montageschraube 5 bzw. 6 umgibt, die je einen anderen Steg 12 a durchsetzt, wobei die die Lenker 9 mit Bewegungsspiel 13 aussparenden Öffnungsränder 14 in der Ventilplatte 3 bzw. 3 a bzw. 3 b über und zwischen den Rändern des jeweils benachbarten Sitzringes 11 liegen. Die Ventilplatte 3 wird in an sich bekannter Weise in die dargestellte Schließposition belastet durch Wendeldruckfedern B, die im Fänger 2 eingenistet sind.

Die Ausführungsbeispiele zeigen noch eine an sich bekannte Dämpfungsplatte 4, welche kongruent zur Ventilplatte 3 bzw. 3 a bzw. 3 b ausgebildet und angeordnet ist, und deren Lenker zwischen den Hubbeilagen 7 an den Montageschrauben 5 in der gleichen Weise fixiert sind wie die Lenker 9 der Ventilplatte 3.

Insbesondere große Ventil- und Dämpfungsplatten können konzentrisch auf mehrere Ringbereiche verteilte derartige Lenker aufweisen.

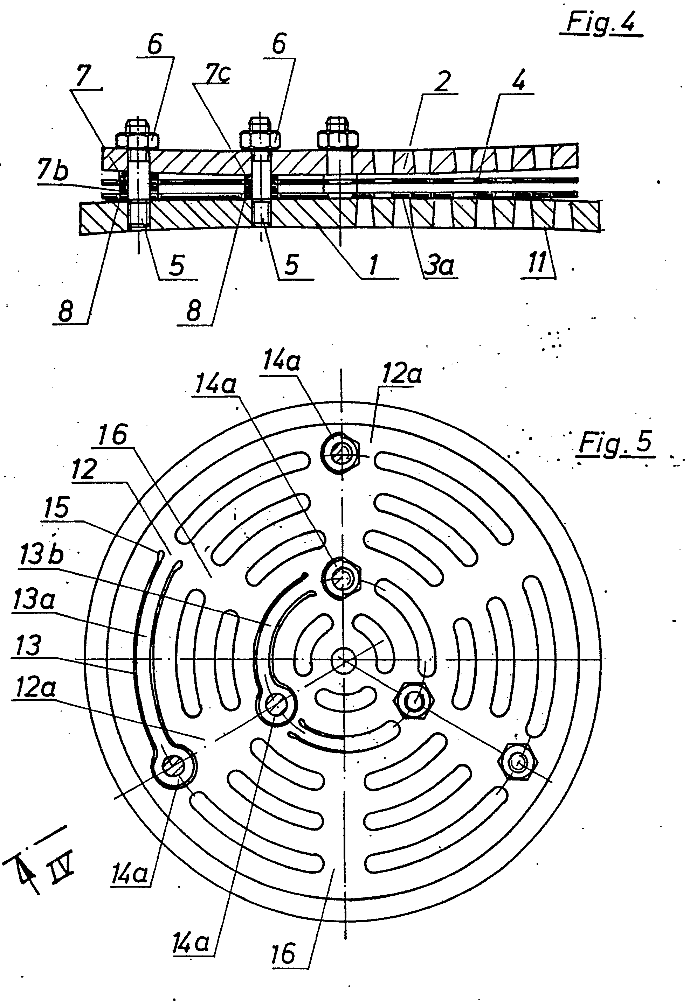

Im Ausführungsbeispiel nach Fig. 4 und 5, gedacht insbesondere für große Ventil- und Dämpfungsplatten, sind in radial inneren und äußeren Bereichen der Stege 12, 12 a zwei Lenkerkränze 13 a, 13 b konzentrisch zueinander angeordnet, wobei die Hubbeilagen 7 c der inneren Einspannungen ein geringeres Gesamtdickenmaß haben als die Hubbeilagen 7 b der radial äußeren Einspannungen.

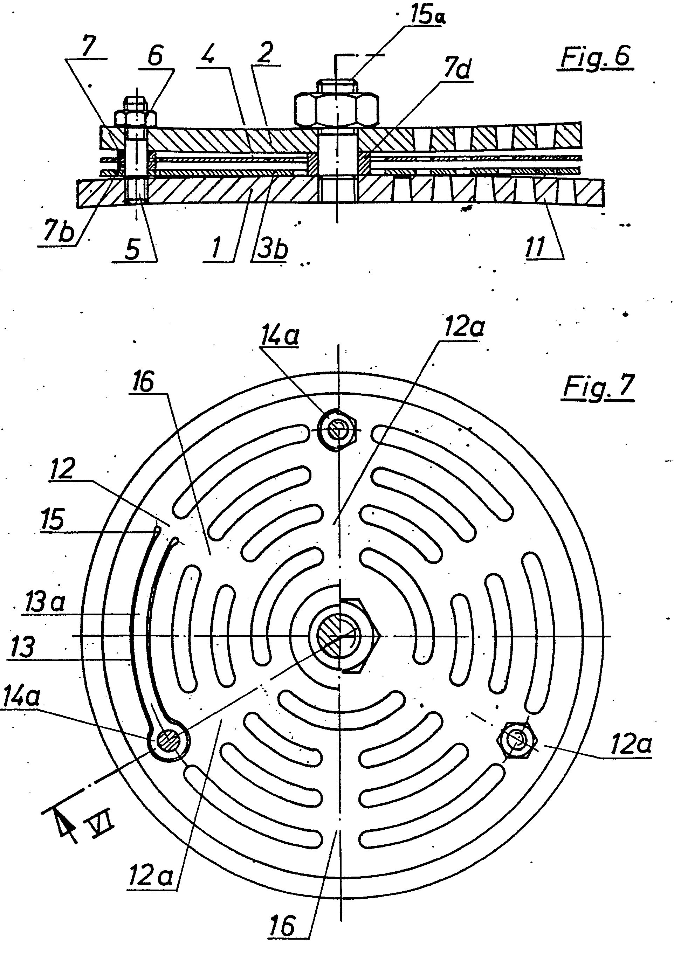

Im Ausführungsbeispiel nach Fig. 6 und 7 ist einem Lenkerkranz 13 a ein an sich bekannter Zentralbolzen 15 a hinzugefügt, dessen Hubbeilagen 7 d eine geringer Stärke aufweisen als die Hubbeilagen 7 b der Verschraubungen 6 des Lenkerkranzes.

In beiden Fällen wird dadurch eine konvexe elastische Vorspannung zwischen Sitz und Fänger erreicht, welche der Deutlichkeit halber übertrieben groß gezeichnet ist. Bei einem Ventil mit dem dargestellten Außendurchmesser von 125 mm (am Sitz) darf sich der Sitz unter der größtzulässigen Belastung gegen druckseitig etwa 40 bar am Ende des Schließhubes aus der ebenen Position der Sitzfläche nach außen wölben um maximal etwa 0,07 mm, wenn das Ventil noch dicht schließen soll. Die Pfeilhöhe der umgekehrten elastischen Vorspannung von Sitz und Fänger beträgt in den beiden letzten Ausführungsbeispielen ebenfalls je etwa 0,07 mm. Der Sitz darf sich also gegen Ende des Schließhubes um insgesamt 0,14 mm verformen, so daß er eine wesentlich geringere Materialstärke benötigt, was eine Materialersparnis in den dargestellten Ausführungsbeispielen von 56% für den Sitz bedeutet und eine Verringerung des Schadraumes für das Druckventil um ca. 60% sowie eine bessere Dämpfung des Aufschlages der Ventilplatte gegen den Sitz durch dessen verminderte Masse. Die bessere Dämpfung des Schließungsschlages erlaubt den Betrieb des Ventiles in Kolbenmaschinen mit höherer Drehzahl, was eine weitere Vergrößerung der Förderleistung bedeutet bei gegebenem Außendurchmesser des Ventiles. Die Sitzfläche wird in entspanntem Zustand plan bearbeitet mit der Flächenschleifmaschine, auf eine Ebenheit von 0,01 mm.

## Patentansprüche

1. Plattenventil, dessen runde Ventilplatte (3) zwischen Ringen und diese verbindenden Radialstegen kreisegmentförmige Durchlaßöffnungen bildet, die mit entsprechenden Ringen im Sitz (1) sowie Öffnungen im Fänger (2) und etwaigen Feder- oder Dämpfungsplatten (4) korrespondieren, wobei die Ventilplatte (3) reibungsfrei geführt ist durch ihr anwachsende in Umfangsrichtung verteilte bogenförmige Lenker (9), dadurch gekennzeichnet, daß die Wurzeln (10) der Lenker (9 bzw. la bzw.13 b) mit Ausrundungen (15) mittig in je einem Steg (12) angeschnitten sind, wobei die Lenker parallel über jeweils einem Ringsegment (11) des Sitzes (1) spielen und an ihrem freien Ende jeweils einen Einspannring (7 a) bilden, welcher je mit weiteren ringförmigen Hubbeilagen (7) je eine Montageschraube (5) umgibt, die je einen anderen Steg (12 a) sowie Sitz (1) und Fänger (2)durchsetzt, wobei die die Lenker (9 bzw. 13 a bzw. 13 b) mit Bewegungsspiel (13) aussparenden Öffnungsränder in der Ventilplatte (3 bzw. 3a bzw. 3 b) über und zwischen den Rändern des jeweils benachbarten Sitzringes (11) liegen.

2. Plattenventil nach Anspruch 1, dadurch gekennzeichnet, daß die Lenker (13 a bzw. 13 b) konzentrisch auf wenigstens zwei Ringbereiche verteilt sind (Fig. 5) und die Hubbeilagen (7 c) der radial inneren Einspannungen ein geringeres Gesamtdickenmaß haben als die Hubbeilagen (7 b) der radial äußeren Einspannungen.

3. Plattenventil nach Anspruch 1, dadurch gekennzeichnet, daß ein an sich bekannter Zentralbolzen (15 a) vorgesehen ist mit Hubbeilagen (7 d), deren Gesamtdicke kleiner ist als diejenige der Hubbeilagen (7 b) der Lenker (12 a).

4. Verfahren zur Herstellung eines Plattenventils nach einem der vorhergehenden Ansprüche, dadurch gekennzeichnet, daß mindestens die Trennschlitze zwischen den Lenkern und dem sie umgebenden Öffnungsrand durch einen Laserstrahl geschnitten werden.

5. Verfahren nach Anspruch 4, dadurch gekennzeichnet, daß koaxial zum Laserstrahl Sauerstoffgas auf den Brennfleck geblasen wird.

6. Verfahren nach Anspruch 4 oder 5, dadurch gekennzeichnet, daß mit einem pulsierenden Laserstrahl gearbeitet wird.

## Claims

1. A plate valve the round valve plate (3) of which between rings and radial webs connecting them forms passages the shape of segments of a circle, which coincide with corresponding rings in the seat (1) as well as openings in the catcher (2) and possible spring or damping plates (4), where the valve plate (3) is guided frictionlessly by arcuate links (9) growing out of it and distributed in the circumferential direction, characterized in that the roots (10) of the links (9 resp. 13a resp. 13b) are cut each into one web (12) at the centre with roundings-off (15) so that the links act in parallel each over one annular segment (11) of the seat (1) and form at their free ends in each case a clamping ring (7a) each of which with further annular spacers (7) surrounds a fixing screw (5), each of which passes through another web (12a) as well as the seat (1) and the catcher (2) so that the edges of the openings in the valve plate (3 resp. 3a resp. 3b) which leave a clearance (13) for the movement of the links (9 resp. 13a resp. 13b) lie above and between the edges of the adhacent ring (11) of the seat in each case.

2. A plate valve as in Claim 1, characterized in that the links (13a resp. 13b) are distributed concentrically over at least two annular regions (Figure 5) and the spacers (7c) of the radislly inner points of fixture have a smaller total thickness dimension than the spacers (7b) of the radially outer points of fixture.

3. A plate valve as in Claim 1, characterized in that a central bolt (15a) which is in itself known is provided with spacers (7d) the total thickness of which is less than that of the spacers (7b) of the links (12a).

4. A method of production of a plate valve as in one of the preceding Claims, characterized in that at least the separating slits between the links and the edge of the opening surrounding them are cut by a laser beam.

5. A method as in Claim 4, characterized in that oxygen gas is blown coaxially with the laser beam onto the focal spot.

6. A method as in Claim 4 or 5, characterized in that the work is done with an intermittent laser beam.

## Revendications

1. Soupape à plateau dont la plaque de soupape ou plaque obturatrice (3) formée d'anneaux réunis par des barrettes ou plages radiales comporte entre ceux-ci des orifices de passage en forme de segments d'anneaux, disposés en regard des anneaux correspondants situés entre les orifices du plateau (ou siège) (1) de la soupape et en regard des orifices prévus dans le disque de butée (2) et dans un disque élastique ou amortisseur (4) éventuels, la plaque obturatrice (3) étant guidée, sans frottement, au moyen de languettes de liaison (9) en forme d'arcs de cercle taillées dans ladite plaque et réparties dans le sens périphérique, caractérisée par le fait que les extrémités "encastrées"(10) desdites languettes de liaison (9, 13a, 13b) sont taillées chacune à partir de la ligne médiane dans une barrette radiale (12) avec des arrondis (15), chacune desdites languettes de liaison s'étendant parallélement à un segment d'anneau (11) du plateau siège (1) forme à son extrémité libre un anneau de fixation (7a), chacun de ses anneaux de fixation, ensemble avec d'autres rondelles de calage (7) entoure un goujon d'assemblage (5), donc chacun traverse une barrette radiale (12a) différente ainsi que le plateau siège (1) et le disque de butée (2), les bords des orifices qui, dans le disque clapet (3, 3a, 3b) entourent les languettes de liaison (9, 13a, 13b en ménageant un jeu de fonctionnement (13), etant situés entre et sur les bords de l'anneau (11) du plateau siége qui se trouve en face.

2. Soupape à plateau selon la revendication 1, caractérisée par le fait que les languettes de liaison (13a, 13 b) sont réparties concentriquement au moins entre deux domaines annulaires (fig. 5) et que les rondelles de calage (7c) des points de fixation qui dans le sens radial se trouvent à l'intérieur ont une épaisseur totale moins grande que celle des rondelles de calage (7b) des points de fixation qui se trouvent vers l'extérieur.

3. Soupape à plateau selon la revendication 1, caractérisée par le fait que le goujon d'assemblage central (15 a) connu en soi, est prévu avec des rondelles de calage (7 d) dont l'épaisseur totale est plus petite que celle des rondelles de calage (7 b) de la languette de liaison (13 a).

4. Methode de fabrication d'une soupape à plateau selon l'une quelconque des revendications ci-dessus, caractérisée par le fait qu'au moins les fentes de séparation entre les languettes de liaison et le bord d'orifice qui les entoure sont découpées au moyen d'un rayon laser.

5. Méthode selon la revendication 4, caractérisée par le fait que coaxialement avec le rayon laser on souffle de l'oxygène sur la tâche de combustion.

6. Méthode selon la revendication 4 ou 5, caractérisée par le fait que l'on travaille avec un rayon laser pulsé.

Fig. 1

Fig. 2

Fig. 3

Fig. 4

Fig. 5

Fig. 6

Fig. 7